(19) Europäisches Patentamt
European Patent Office
Office européen des brevets

(11) **EP 2 233 890 A2**

(12) **EUROPÄISCHE PATENTANMELDUNG**

(43) Veröffentlichungstag:
 **29.09.2010 Patentblatt 2010/39**

(51) Int Cl.:
 **G01D 5/24** $^{(2006.01)}$

(21) Anmeldenummer: **10405024.0**

(22) Anmeldetag: **10.02.2010**

(84) Benannte Vertragsstaaten:
 **AT BE BG CH CY CZ DE DK EE ES FI FR GB GR HR HU IE IS IT LI LT LU LV MC MK MT NL NO PL PT RO SE SI SK SM TR**
 Benannte Erstreckungsstaaten:
 **AL BA RS**

(30) Priorität: **11.02.2009 CH 2032009**

(71) Anmelder: **Baumer Innotec AG**
 **8500 Frauenfeld (CH)**

(72) Erfinder:
 • **Hinn, Werner**
  **8711 Stäfa (CH)**

 • **Brändle, Daniel**
  **8500 Frauenfeld (CH)**
 • **Kamm, Lars**
  **8718 Schänis (CH)**
 • **Hafner, Ueli**
  **8413 Neftenbach (CH)**

(74) Vertreter: **Gachnang, Hans Rudolf**
 **Gachnang AG**
 **Badstrasse 5**
 **Postfach 323**
 **8501 Frauenfeld (CH)**

(54) **Kapazitiver Sensor und Verfahren zur kapazitiven Erfassung eines Objektabstandes**

(57) Der kapazitive Sensor und das Verfahren zur kapazitiven Erfassung eines Objektabstandes nutzen einen volldifferentiellen Operationsverstärker (7) mit zwei Integrationskapazitäten $C_{I01}$ und $C_{I02}$ in den Rückkopplungszweigen zum Erfassen einer Messkapazität $C_S$. Der Sensor umfasst eine integrierte elektronische Schaltung, die zusätzlich zu einem Eingang für die Messkapazität $C_S$ auch Eingänge für eine Referenzkapazität $C_R$ und für Ausgleichskapazitäten $C_{PS}$ und $C_{PR'}$. Durch zyklisches Verbinden dieser Eingänge mit gegebenen Spannungspotentialen und mit den beiden Eingängen des Operationsverstärkers (7) werden Fehler aufgrund von parasitären Kapazitäten $C_{PS}$ und $C_{PR}$ eliminiert. Fehler, die durch unterschiedliche Common-Mode-Spannungen $V_{CM}$ des Operationsverstärkers (7) entstehen könnten, werden durch alternierendes Verbinden der beiden Eingänge des Operationsverstärkers (7) mit diesem Common-Mode-Potential verhindert. Ausgangsseitig erzeugt der Sensor einen Bitstream, dessen mittleres Spannungspotential antiproportional zur Messkapazität $C_S$ ist.

FIG. 2

**Beschreibung**

Gegenstand der Erfindung ist ein kapazitiver Sensor und ein Verfahren zur kapazitiven Erfassung eines Objektabstandes gemäss den Merkmalen der Patentansprüche 1 und 8.

Kapazitive Näherungsschalter werden in der Prozess- und Automatisierungstechnik verbreitet zum Erfassen von elektrisch leitenden oder nicht leitenden Objekten eingesetzt, z.B. zum Erfassen von sich bewegenden Maschinenteilen oder Füllständen in Behältern. Beim Annähern des zu erfassenden Objekts an den Sensor ändert sich der Wert einer Messkapazität des Sensors. In der Regel ist diese Messkapazität Bestandteil eines Oszillators, z.B. eines RC-Oszillators. Die Schwingungsbedingung dieses Oszillators ist nur dann erfüllt, wenn der Wert der Messkapazität aufgrund äusserer Einflüsse (Annäherung des Messobjektes) einen Minimalwert überschreitet. Der Schaltzustand des Sensorausgangs ist abhängig von der Schwingungsamplitude des Oszillators. Sobald diese Schwingungsamplitude einen vorgegebenen oder vorgebbaren Wert überschreitet, ändert sich der Schaltzustand des Sensorausgangs. Zum Einstellen bzw. Vorgeben eines Schaltabstandes kann z.B. mittels eines Potentiometers als Einstellmittel die Resonanzfrequenz des Oszillators oder alternativ die Referenzspannung für den Vergleich der Schwingungsamplitude verändert werden.

Grundsätzlich könnte auch die Schwingungsamplitude erfasst und mittels analoger oder digitaler Signalverarbeitung weiter bearbeitet werden. Dies erfordert aber relativ aufwändige elektronische Schaltungen mit entsprechend hohem Platzbedarf.

Die Messkapazität und damit auch die Schwingungsamplitude nehmen mit zunehmendem Objektabstand stark ab, wobei die Beziehung zwischen Objektabstand und Schwingungsamplitude nicht linear ist. Entsprechend sind Auflösung und Genauigkeit des Sensors mit zunehmendem Objektabstand geringer.

Im Weiteren ist die Reaktionszeit bei oszillatorischen Lösungen relativ lange. Dies trifft insbesondere dann zu, wenn zusätzlich Analog-Digital-Wandler verwendet werden, um analoge Messsignale für die weitere Verarbeitung zu digitalisieren.

Aus der WO 2006/132960 A1 ist eine Kapazitätsmessschaltung bekannt, bei der eine Messkapazität unter Einbezug eines Sigma-Delta-Wandlers erfasst wird. Dabei wird die Messkapazität getaktet über einen Schalter mit einer Referenzspannungsquelle und anschliessend mit einem passiven Netzwerk verbunden, wobei jeweils eine Ladungsübertragung an das passive Netzwerk erfolgt. Sobald die Ladung einen Schwellwert überschreitet, wird sie um einen vorgegebenen Betrag reduziert und der Vorgang wird wiederholt. Am Ausgang des Sigma-Delta-Wandlers wird in Abhängigkeit der Messkapazität und des passiven Netzwerks ein digitales Signal in Gestalt eines Bitstreams erzeugt. Dieser Bitstream wird durch ein Filter in eine gewünschte Ausgangsgrösse umgewandelt.

Aus der WO 2006/125639 A1 ist eine weitere Schaltung zur Erfassung einer Messkapazität bekannt, wobei diese Messkapazität entweder in einem Rückkopplungszweig oder in einem Zuleitungszweig eines Operationsverstärkers angeordnet ist.

Bei derartigen Messanordnungen können parasitäre Kapazitäten und Common-Mode-Spannungen zu Fehlern beim Messresultat führen. Zudem können unterschiedliche Betriebsspannungen Messfehler verursachen.

Eine Aufgabe der vorliegenden Erfindung ist es, einen kapazitiven Sensor und ein Verfahren zum einfachen und präzisen Erfassen einer Messkapazität zu schaffen.

Diese Aufgabe wird gelöst durch einen kapazitiven Sensor und durch ein Verfahren zum Erfassen einer kapazitiven Messgrösse gemäss den Merkmalen der Patentansprüche 1 und 8.

Der erfindungsgemässe kapazitive Sensor umfasst eine integrierte elektronische Schaltung mit einem Delta-Sigma-Wandler in volldifferenzieller Ausführung. Die elektronische Schaltung ist vorzugsweise auf einem einzigen Chip als anwendungsspezifische integrierte elektronische Schaltung, kurz ASIC genannt, ausgebildet. Die Ausgänge des Operationsverstärkers sind mit einer von einem Systemtakt getriggerten Triggervorrichtung zum Erzeugen eines Bitstreams verbunden, wobei dieser Bitstream einen zur Messkapazität reziproken Mittelwert aufweist. In zwei Rückkopplungszweigen des Operationsverstärkers ist je eine Integrationskapazität angeordnet. Ein Messkondensator, dessen Messkapazität durch äussere Einflüsse veränderlich ist, und ein Referenzkondensator mit einer festen Referenzkapazität sind mit Eingangs-Schnittstellen bzw. Eingängen der integrierten Schaltung verbunden. Bei alternativen Ausgestaltungen könnten der Messkondensator und/oder der Referenzkondensator auch mit in die elektronische Schaltung integriert sein. Sowohl beim Messkondensator als auch beim Referenzkondensator ist je eine der Elektroden mit dem Massepotential bzw. mit einem festen Bezugspotential verbunden. Die jeweils anderen Elektroden sind über eine Schaltvorrichtung mit dem nicht-invertierenden und dem invertierenden Eingang des Operationsverstärkers verbindbar. Die Schaltvorrichtung wird von einer Steuerelektronik kontrolliert und umfasst Schaltelemente bzw. Schalter, welche in Abhängigkeit des Ausgangszustandes der Triggervorrichtung geschlossen und geöffnet werden. Die Steuerelektronik ist vorzugsweise teilweise oder vollständig in die elektronische Schaltung integriert, welche auch den Delta-Sigma-Wandler umfasst. In Analogie zu den Eingangsschnittstellen für den Messkondensator und den Referenzkondensator umfasst die elektronische Schaltung weitere Eingangsschnittstellen für Kompensationskapazitäten, welche den parasitären Kapazitäten des Referenzkondensators und des Messkondensators entsprechen. Diese Eingangsschnittstellen sind ebenfalls über die Schaltvorrichtung mit dem invertierenden und dem nicht-invertierenden Eingang des Operationsverstärkers verbindbar.

Die vier Eingänge werden in einem Vier-Phasen-Betrieb in einer für jeden dieser Eingänge vorgeschriebenen Reihenfolge jeweils mit dem invertierenden und dem nicht-invertierenden Eingang des Operationsverstärkers sowie mit zwei unterschiedlichen, fest vorgegebenen Potentialen (Massepotential und Betriebsspannungspotential) verbunden. Der Phasenwechsel wird jeweils durch den Systemtakt getriggert. Der invertierende Eingang und der nicht-invertierende Eingang des Operationsverstärkers werden alternierend während jeweils zwei der vier Phasen mit dem Common-Mode-Potential des Operationsverstärkers verbunden.

Dadurch und durch geeignete Verbindungskonfigurationen bei den vier Eingängen während der einzelnen Phasen wird erreicht, dass die Spannungsdifferenz zwischen den beiden Ausgängen des Operationsverstärkers mit jedem Durchlauf eines Vier-Phasen-Zyklus jeweils - abhängig vom Ausgangszustand der Triggervorrichtung - um bestimmte Spannungswerte inkrementiert bzw. dekrementiert werden. Diese Spannungswerte sind nur von der Messkapazität, der Referenzkapazität, den Integrationskapazitäten und von der Betriebsspannung abhängig, nicht jedoch von der Common-Mode-Spannung und von Parasitärkapazitäten. Störungen bzw. Fehler des Messresultats aufgrund von schaltungstechnisch bedingten parasitären Kapazitäten und aufgrund der Common-Mode-Spannung des Operationsverstärkers werden beim erfindungsgemässen kapazitiven Sensor somit eliminiert. Die beiden Integrationskapazitäten werden mit identischem Wert vorgegeben. In diesem Fall ist die mittlere Spannung am Ausgang der elektronischen Schaltung stellt sich ein mittlerer Spannungswert ein, der antiproportional zur Messkapazität ist.

Anhand einiger Figuren wird die Erfindung im Folgenden näher beschrieben. Dabei zeigen

Figur 1       eine vereinfachte erste Schaltungsanordnung zur Erfassung einer Messkapazität,

Figur 2       eine weitere Schaltungsanordnung zur Erfassung einer Messkapazität mit Mitteln zum Unterdrücken von Parasitärkapazitäten,

Figur 3       eine Darstellung von Taktsignalen bei einer Schaltungsanordnung gemäss Figur 2,

Figur 4       eine vereinfachte Darstellung der Schaltungsanordnung aus Figur 2 während der ersten von vier Zyklusphasen,

Figur 5       eine vereinfachte Darstellung der Schaltungsanordnung aus Figur 2 während der zweiten von vier Zyklusphasen,

Figur 6       eine vereinfachte Darstellung der Schaltungsanordnung aus Figur 2 während der dritten von vier Zyklusphasen,

Figur 7       eine vereinfachte Darstellung der Schaltungsanordnung aus Figur 2 während der letzten von vier Zyklusphasen,

Figur 8       ein Diagramm mit Spannungsverläufen bei einer Schaltungsanordnung gemäss Figur 2 für einen ersten Wert der Messkapazität,

Figur 9       ein Diagramm gemäss Figur 8, jedoch für einen zweiten Wert der Messkapazität,

Figur 10      ein Diagramm gemäss Figur 8, jedoch für einen dritten Wert der Messkapazität,

Figur 11      ein Diagramm gemäss Figur 8, jedoch für einen vierten Wert der Messkapazität.

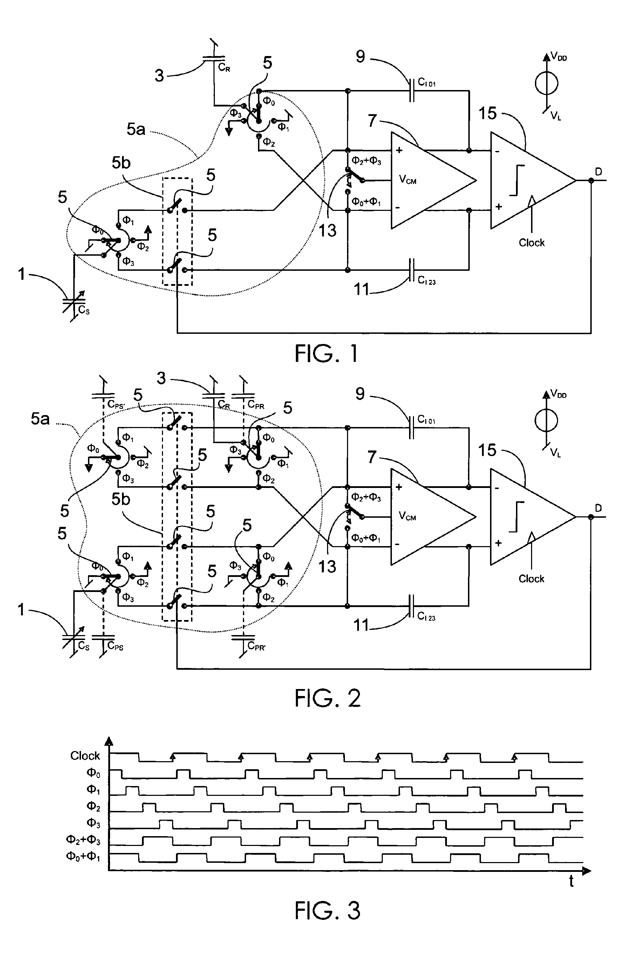

Figur 1 zeigt eine vereinfachte erste Schaltungsanordnung zur Erfassung der Messkapazität $C_S$ eines Messkondensators 1. Der Messkondensator 1 und ein Referenzkondensator 3 mit einer Referenzkapazität $C_R$ sind über eine Schaltvorrichtung mit dem invertierenden und dem nicht-invertierenden Eingang eines volldifferenziellen Operationsverstärkers 7 verbindbar. Die Schaltvorrichtung umfasst mehrere Schaltelemente bzw. elektronische Schalter 5, die durch eine dünne gepunktete Linie 5a umrahmt sind. In einem Rückkopplungszweig zwischen dem negativen Ausgang und dem nicht-invertierenden Eingang des Operationsverstärkers 7 ist ein erster Integrationskondensator 9 mit einer ersten Integrationskapazität $C_{I01}$ angeordnet. In analoger Weise ist ein zweiter Integrationskondensator 11 mit einer zweiten Integrationskapazität $C_{I23}$ in einem Rückkopplungszweig zwischen dem positiven Ausgang und dem invertierenden Eingang des Operationsverstärkers 7 angeordnet. Über einen elektronischen Umschalter 13 sind der invertierende und der nicht-invertierende Eingang des Operationsverstärkers 7 mit dessen Common-Mode-Potential verbindbar. Die Ausgänge des Operationsverstärkers 7 sind mit den Eingängen einer von einem Systemtakt (Clock) triggerbaren Triggervorrichtung 15 verbunden.

Der Umschalter 13 und die Schalter 5 werden von einer (nicht dargestellten) Steuerelektronik kontrolliert. Die Steuerelektronik kann teilweise oder vollständig zusammen mit der Schaltungsanordnung auf einem gemeinsamen Chip angeordnet sein. Alternativ kann die Steuerelektronik auch als separater Teil ausgebildet und mit der auf einem Chip integrierten Schaltungsanordnung verbunden sein. Nebst der Ansteuerung der Schalter 5 und des Umschalters 13 kann die Steuerelektronik auch zur Ausführung weiterer Aufgaben ausgebildet sein, z.B. zum Bereitstellen einer stabilisierten Spannung $V_{DD}$, zum Generieren des Systemtakts und/oder zur weiteren Verarbeitung der Signale am Ausgang der Triggervorrichtung 15 (Punkt "D").

Zwei durch eine fette unterbrochene Linie 5b umrahmte Schalter 5 sind von der Steuerelektronik in Abhängigkeit des Ausgangszustandes der Triggervorrichtung 15 steuerbar. Diese Schalter 5 sind dazu ausgebildet, die Verbindung zwischen dem Messkondensator 1 und dem invertierenden bzw. dem nicht-invertierenden Eingang des Operationsverstärkers 7 zu unterbrechen und wieder zu schliessen. Sie sind geschlossen, wenn am Punkt D der Signalpegel $V_{DD}$ (wird auch als "$V_H$" oder "H" bezeichnet) ist; sie sind geöffnet, wenn der Signalpegel am Punkt D den Wert "$V_L$" bzw. "L" hat. Bei einer alternativen Ausgestaltung (nicht dargestellt) könnten anstelle der Verbindungen zum Messkondensator 1 auch die Verbindungen zum Referenzkondensator 3 in analoger Weise unterbrochen und wieder geschlossen werden.

Die beiden anderen Schalter 5 in Figur 1 werden von der Steuerelektronik im Systemtakt umgeschaltet. Dabei werden die Eingänge der Schaltungsanordnung, an welche der Messkondensator 1 bzw. der Referenzkondensator 3 angeschlossen sind, in einem Vier-Phasen-Zyklus mit dem invertierenden und dem nicht-invertierenden Eingang des Operationsverstärkers 7 sowie mit $V_L$ und $V_H$ verbunden. Die Abfolge der einzelnen Verbindungen entspricht jener der in Figur 2 dargestellten erweiterten Ausführungsform.

Bei der Schaltungsanordnung gemäss Figur 2 sind im Vergleich zur Anordnung gemäss Figur 2 zusätzlich Mittel zum Eliminieren von Störungen der Messergebnisse durch schaltungstechnisch bedingte Parasitärkapazitäten $C_{PS}$ und $C_{PR}$ des Sensoreingangs und des Referenzeingangs vorgesehen. Zusätzlich zum Sensoreingang, der mit einer Parasitärkapazität $C_{PS}$ behaftet ist, umfasst die Schaltungsanordnung einen ersten Kompensationseingang, der analog zum Sensoreingang ausgebildet und ebenfalls mit einer zumindest annähernd gleichen Parasitärkapazität $C_{PS}$, behaftet ist. Im Unterschied zum Sensoreingang ist kein Messkondensator 1 an den ersten Kompensationseingang angeschlossen. Der erste Kompensationseingang ist analog zum Messeingang über Schalter 5 der Schaltvorrichtung 5a mit den Eingängen des Operationsverstärkers 7 sowie mit $V_L$ und $V_H$ verbindbar, wobei die Verbindungen zum Operationsverstärker 7 von der Steuerelektronik in Abhängigkeit des Ausgangszustandes der Triggervorrichtung 15 unterbrechbar sind.

Zusätzlich zum Referenzeingang, der mit einer Parasitärkapazität $C_{PR}$ behaftet ist, umfasst die Schaltungsanordnung einen zweiten Kompensationseingang, der analog zum Referenzeingang ausgebildet und ebenfalls mit einer zumindest annähernd gleichen Parasitärkapazität $C_{PR}$, behaftet ist. Im Unterschied zum Referenzeingang ist kein Referenzkondensator 3 an den zweiten Kompensationseingang angeschlossen.

Figur 3 zeigt ein Diagramm, bei dem der zeitliche Verlauf des Systemtakts (Clock) und der davon abhängigen Phasentakte $\Phi_0$, $\Phi_1$, $\Phi_2$, $\Phi_3$, $\Phi_2+\Phi_3$ und $\Phi_0+\Phi_1$ dargestellt sind. Die Verbindungen der eingangsseitigen Kapazitäten ($C_S + C_{PS}$, $C_R + C_{PR}$, $C_{PS}$, und $C_{PR}'$) durch Schalter 5 der Schaltungsanordnung 5a mit den Potentialen $V_L$ und $V_H$ sowie mit den beiden Eingängen des Operationsverstärkers 7 während der einzelnen Phasentakte $\Phi_0$, $\Phi_1$, $\Phi_2$ und $\Phi_3$ sind nachfolgend tabellarisch dargestellt, wobei auch die Abhängigkeit vom Ausgangszustand der Triggervorrichtung 15 (Spannung am Punkt "D") berücksichtigt ist: In der ersten Spalte sind die eingangsseitigen Kapazitäten aufgeführt, in der zweiten Spalte die Spannung am Punkt "D". In den restlichen vier Spalten sind die Verbindungsziele angegeben, mit denen die eingangsseitigen Kapazitäten während der in der ersten Zeile aufgeführten Phasen verbunden werden. Dabei gelten folgende Konventionen: I+ = nicht-invertierender Eingang des Operationsverstärkers 7, I- = invertierender Eingang des Operationsverstärkers 7, $V_L$ = Bezugspotential (Masse) und $V_H$ = $V_{DD}$ = positive Betriebsspannung. Die Indizes "L" und "H" stehen für die logischen Zustände "Low" und "High".

| | D | $\Phi_0$ | $\Phi_1$ | $\Phi_2$ | $\Phi_3$ |
|---|---|---|---|---|---|
| $C_S + C_{PS}$ | $V_H$ | $V_L$ | I+ | $V_H$ | I- |
| $C_S + C_{PS}$ | $V_L$ | $V_L$ | | $V_H$ | |
| $C_{PS'}$ | $V_H$ | $V_H$ | I+ | $V_L$ | I- |
| $C_{PS'}$ | $V_L$ | $V_H$ | | $V_L$ | |
| $C_R + C_{PR}$ | $V_H$ | I+ | $V_L$ | I- | $V_H$ |
| $C_R + C_{PR}$ | $V_L$ | I+ | $V_L$ | I- | $V_H$ |
| $C_{PR'}$ | $V_H$ | I+ | $V_H$ | I- | $V_L$ |
| $C_{PR'}$ | $V_L$ | I+ | $V_H$ | I- | $V_L$ |

Während der Phase $\Phi_0$ ist der Integrator mit der ersten Integrationskapazität $C_{I01}$ aktiv. Dabei werden

$C_S + C_{PS}$     auf $V_L$ geladen,
$C_R + C_{PR}$     auf $C_{I01}$ umgeladen,
$C_{PS'}$         auf $V_H$ bzw. $V_{DD}$ geladen,
$C_{PR'}$         auf $C_I$ 01 umgeladen.

Während der Phase $\Phi_1$ ist der Integrator mit der ersten Integrationskapazität $C_{I01}$ aktiv. Dabei werden

$C_S + C_{PS}$ auf $C_{I01}$ umgeladen, falls D = H
$C_R + C_{PR}$ auf $V_L$ geladen,
$C_{PS'}$ auf $C_{I01}$ umgeladen, falls D = H
$C_{PR'}$ auf $V_{DD}$ geladen.

Während der Phase $\Phi_2$ ist der Integrator mit der zweiten Integrationskapazität $C_{I23}$ aktiv. Dabei werden

$C_S + C_{PS}$ auf $V_{DD}$ geladen
$C_R + C_{PR}$ auf $C_{I23}$ umgeladen
$C_{PS'}$ auf $V_L$ geladen
$C_{PR'}$ auf $C_{I23}$ umgeladen

Während der Phase $\Phi_3$ ist der Integrator mit der zweiten Integrationskapazität $C_{I23}$ aktiv. Dabei werden

$C_S + C_{PS}$ auf $C_{I23}$ umgeladen, falls D = H
$C_R + C_{PR}$ auf $V_{DD}$ geladen,
$C_{PS'}$ auf $C_{I23}$ umgeladen, falls D = H
$C_{PR'}$ auf $V_L$ geladen.

Da die Parasitärkapazitäten $C_{PR}$ und $C_{PR'}$ bzw. $C_{PS}$ und $C_{PS'}$ zumindest annähernd gleich gross sind, neutralisieren sich die Anteile dieser Parasitärkapazitäten bei den Integrationsschritten in jeder der vier Phasen. Als Resultat eines solchen Vier-Phasen-Zyklus ändert sich die Spannung zwischen dem positiven und dem negativen Ausgang des Operationsverstärkers 7 wie folgt:

$$\Delta V_{Out} = 2 \cdot \frac{C_R - D \cdot C_S}{C_I} \cdot V_{DD}$$

Dabei kann D die Werte 0 oder 1 haben, je nachdem, ob der Ausgang der Triggervorrichtung 15 $V_L$ oder $V_H$ ist und entsprechend die von der Linie 5b umrahmten Schalter 5 geöffnet oder geschlossen sind.

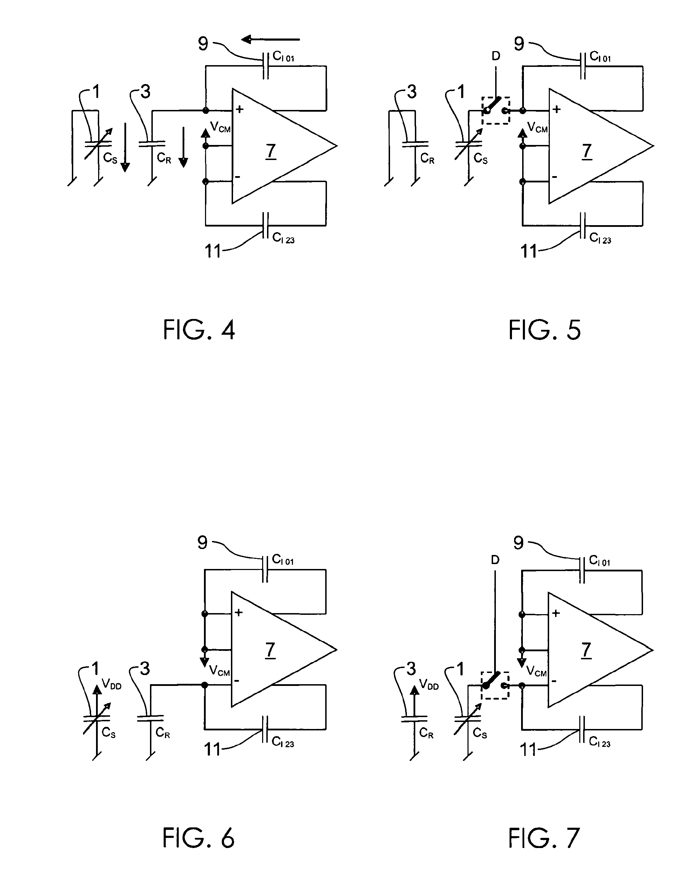

Die Figuren 4 bis 7 zeigen vereinfacht die Konfigurationen während der einzelnen Taktphasen für eine vereinfachte Schaltung ohne Parasitärkapazitäten, wie sie auch in Figur 1 dargestellt ist. Der besseren Übersichtlichkeit halber ist jeweils auch die Triggervorrichtung 15 nicht dargestellt.
Für die einzelnen Phasen sind nachfolgend die Spannungen $V_{C_S(\Phi)}$ am Messkondensator 1, $V_{C_R(\Phi)}$ am Referenzkondensator 3, $V_{C_{I01}(\Phi)}$ an der ersten Integrationskapazität 9, $V_{C_{I23}}(\Phi)$ an der zweiten Integrationskapazität und $V_{out(\Phi)}$ zwischen den Ausgängen des Operationsverstärkers 7 angegeben.

Phase 1:

$$V_{C_S(\Phi)} = 0V$$

$$V_{C_R(\Phi)} = V_{CM}$$

$$V_{C_{I01}(\Phi)} = V_{C_{I01}(\Phi-1)} + \frac{C_R}{C_{I01}} \left( V_{DD} - V_{CM} \right)$$

$$V_{C_{I23}(\Phi)} = V_{C_{I23}(\Phi-1)} + \frac{C_R}{C_{I01}} \left( V_{DD} - V_{CM} \right)$$

$$V_{Out(\Phi)} = V_{C_{I23}(\Phi-1)} + V_{C_{I01}(\Phi-1)} + 2\frac{C_R}{C_{I01}} \left( V_{DD} - V_{CM} \right)$$

Phase 2:

$$V_{C_S(\Phi+1)} = V_{CM}$$

$$V_{C_R(\Phi+1)} = 0V$$

$$V_{C_{I01}(\Phi+1)} = V_{C_{I01}(n)} - D\frac{C_S}{C_{I01}}V_{CM}$$

$$V_{C_{I23}(\Phi+1)} = V_{C_{I23}(n)} - D\frac{C_S}{C_{I01}}V_{CM}$$

$$V_{Out(\Phi+1)} = V_{C_{I23}(n)} + V_{C_{I01}(n)} - 2D\frac{C_S}{C_{I01}}V_{CM}$$

Phase 3:

$$V_{C_S(\Phi+2)} = V_{DD}$$

$$V_{C_R(\Phi+2)} = V_{CM}$$

$$V_{C_{I01}(\Phi+2)} = V_{C_{I01}(\Phi+1)} + \frac{C_R}{C_{I23}}V_{CM}$$

$$V_{C_{I23}(\Phi+2)} = V_{C_{I23}(\Phi+1)} + \frac{C_R}{C_{I23}}V_{CM}$$

$$V_{Out(\Phi+2)} = V_{C_{I23}(\Phi+1)} + V_{C_{I01}(\Phi+1)} + 2\frac{C_R}{C_{I23}}V_{CM}$$

Phase 4

$$V_{C_S(\Phi+3)} = V_{CM}$$

$$V_{C_R(\Phi+3)} = V_{DD}$$

$$V_{C_{I01}(\Phi+3)} = V_{C_{I01}(\Phi+2)} - D\frac{C_S}{C_{I23}}\left(V_{DD} - V_{CM}\right)$$

$$V_{C_{I23}(\Phi+3)} = V_{C_{I23}(\Phi+2)} - D\frac{C_S}{C_{I23}}\left(V_{DD} - V_{CM}\right)$$

$$V_{Out(\Phi+3)} = V_{C_{I23}(\Phi+2)} + V_{C_{I01}(\Phi+2)} - 2D\frac{C_S}{C_{I23}}\left(V_{DD} - V_{CM}\right)$$

Da die Integrationskapazitäten $C_{I01}$ und $C_{I23}$ zumindest annähernd gleich gross sind ($C_{I01} = C_{I01} = C_{I01}$), ist die Spannung $V_{OUT(n)}$ zwischen den Ausgängen des Operationsverstärkers 7 nach dem n-ten 4-Phasen-Zyklus

$$V_{Out(n)} = 2\left(V_{C_I(n-1)} + \frac{C_R}{C_I}\cdot V_{DD} - D\cdot\frac{C_S}{C_I}\cdot V_{DD}\right).$$

Die Spannungsänderung $\Delta V_{OUT}$ am Ausgang des Operationsverstärkers 7 nach einem 4-Phasen-Zyklus ist somit im Falle von D = 0 proportional zum Verhältnis aus Referenzkapazität $C_R$ und Integrationskapazität $C_I$ und im Falle von D = 1 proportional zum Verhältnis aus der Differenz zwischen Referenzkapazität $C_R$ und Messkapazität $C_S$ und der Integrationskapazität $C_I$:

$$\Delta V_{Out} = 2\cdot\frac{C_R - D\cdot C_S}{C_I}\cdot V_{DD}$$

Parasitärkapazitäten und Common-Mode-Spannungen des Operationsverstärkers 7 haben keinen Einfluss auf die Ausgangsspannungen des Operationsverstärkers 7. Die vom Bitstream am Ausgang der Triggervorrichtung 15 erzeugbare mittlere Ausgangsspannung beträgt

$$\overline{D}_{Out} = V_{DD}\frac{C_R}{C_S}$$

und ist somit umgekehrt proportional zur Messkapazität $C_S$.

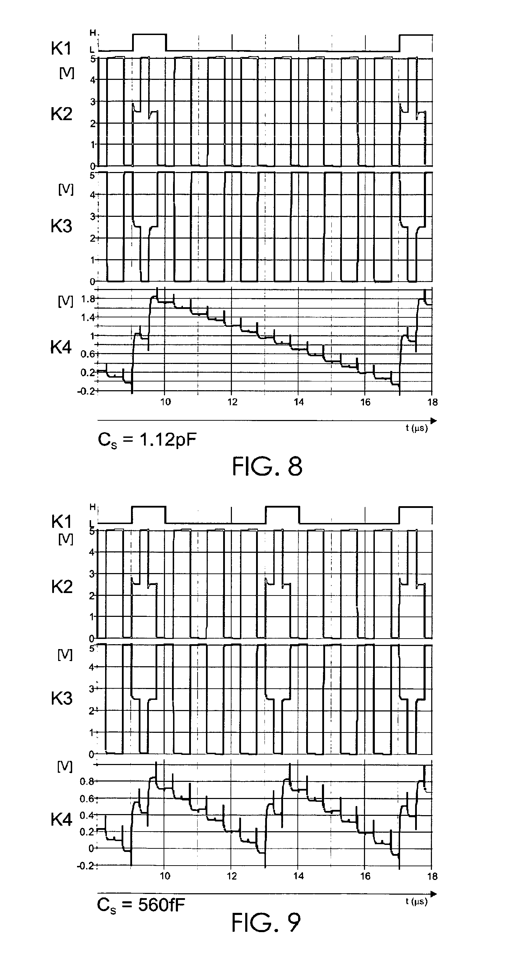

Die Figuren 8 bis 11 beziehen sich auf eine Schaltungsanordnung gemäss Figur 1 oder 2. Sie zeigen jeweils für unterschiedliche Werte der Messkapazität $C_S$ Diagramme, bei denen die mit K1, K2, K3 und K4 bezeichneten Kurven den zeitlichen Verlauf folgender Grössen darstellen:

- K1: Ausgangszustand D (L oder H) der Triggervorrichtung 15,
- K2: Spannung am invertierenden Eingang des Operationsverstärkers 7,
- K3: Spannung am nicht-invertierenden Eingang des Operationsverstärkers 7
- K4: Differentielle Integratorausgangsspannung

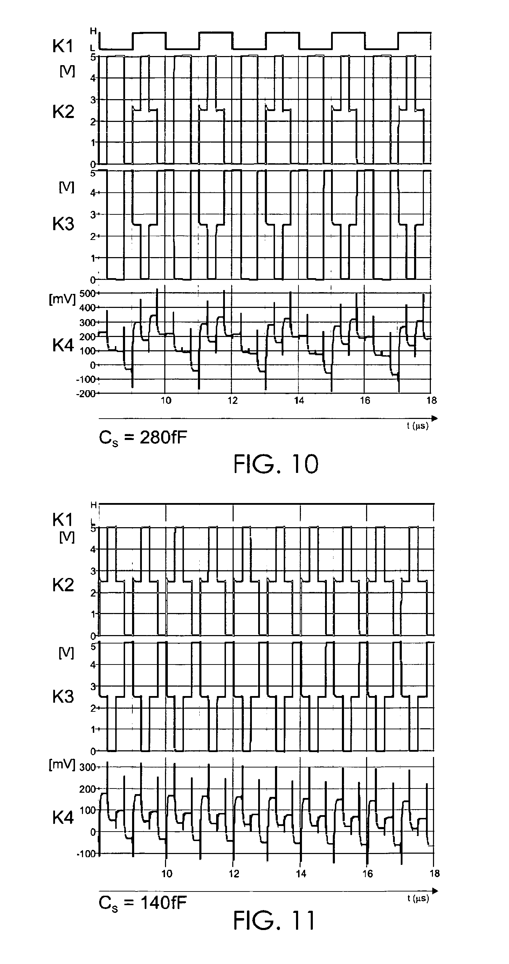

Die Zeitskala ($2\mu$s/Einheit) ist bei allen Kurven K1 bis K4 dieselbe. Die Spannungsskalen bei den Kurven K2, K3 und K4 sind in V/Einheit oder mV/Einheit angegeben. Die Werte der Messkapazität CS betragen 1.12pF bei Figur 8; 560fF bei Figur 9; 280fF bei Figur 10 und 140fF bei Figur 11.

Das Ausgangssignal (D) der Triggervorrichtung 15 besteht aus Rechtecksignalen, die während jeweils vier Systemtakten (Clock) bzw. während eines 4-Phasen-Zyklus das Potential $V_H$ aufweisen und in einem zeitlichen Abstand aufeinander folgen, der umgekehrt proportional zur Messkapazität $C_S$ ist. Dieses Signal kann z.B. bei einem kapazitiven Distanzsensor als pulsbreiten-moduliertes Abstandsignal ausgegeben werden. Alternativ kann das Signal auch digital weiter verarbeitet werden, wobei die zeitlichen Abstände aufeinander folgender Pulse ausgewertet werden. Die Übertragungsfunktion bzw. die Kennlinie des Sensors kann dabei individuell vorgegeben werden. Bei einer weiteren alternativen Ausgestaltung des kapazitiven Sensors kann aus dem Ausgangssignal der Triggervorrichtung 15 z.B. durch ein nachgeschaltetes Filter auf einfache Weise ein analoges Ausgangssignal erzeugt werden, welches eine -zumindest näherungsweise - linearisierte Funktion eines vom Sensor zu erfassenden Objektabstandes oder des Kehrwertes der Messkapazität $C_S$ darstellt. Die Werte der Integrationskapazitäten $C_{I01}$ und $C_{I23}$ und der Referenzkapazität $C_R$ können je nach gewünschtem Messbereich und/oder erforderlicher Auflösung oder Genauigkeit des Sensors festgelegt werden. Insbesondere kann vorgesehen sein, dass der Wert jeder der Integrationskapazitäten $C_{I01}$ und $C_{I23}$ z.B. durch die Steuerelektronik veränderbar ist, indem jeweils zwei oder mehrere Kondensatoren durch elektronische Schalter parallel geschaltet werden und gemeinsam die Integrationskapazität $C_{I01}$ bzw. $C_{I23}$ bilden. In analoger Weise kann auch der Wert der extern an den Chip angeschlossenen Referenzkapazität $C_R$ verändert und an die jeweiligen Erfordernisse angepasst werden. Selbstverständlich können nebst kapazitiven analogen Distanzsensoren auch Näherungsschalter oder beliebige andere Sensoren, bei denen eine Kapazität erfasst werden muss, in der erfindungsgemässen Weise ausgebildet werden. Dadurch, dass die elektronische Schaltung mit dem Delta-Sigma-Wandler monolithisch bzw. auf nur einem Chip integriert ist, kann sichergestellt werden, dass die beiden Integrationskapazitäten $C_{I01}$ und $C_{I23}$ und die Parasitärkapazitäten CPR und CPR' bzw. CPS und CPS' der Eingänge nahezu identisch sind.

Herkömmliche kapazitive Distanzsensoren messen die Kapazität zwischen der Sensorelektrode und dem Target (d.h. dem Objekt, dessen Abstand zum Sensor gemessen werden soll). Weil sich die gemessene Kapazität umgekehrt proportional zum Abstand zwischen Sensorelektrode und Target verhält, sinkt die Messempfindlichkeit bzw. der Quotient "relative Ausgangsgrössenänderung dividiert durch zugehörige relative Wegänderung" mit zunehmender Distanz. Die Messgenauigkeit wird somit bei derartigen herkömmlichen Sensoren mit zunehmender Distanz schlechter. Dies gilt auch bei bekannten kapazitiven Sigma-Delta-Sensoren.

Mit dem neuen Verfahren wird dieses Problem dadurch gelöst, dass nicht die Kapazität C, sondern eine dazu reziproke Grösse 1/C gemessen wird. Dadurch verhält sich die Ausgangsgrösse des Sensors zumindest näherungsweise proportional zur Distanz des Targets, und die Empfindlichkeit und Genauigkeit des Sensors bleiben bis zu grösseren Distanzen erhalten. Beim erfindungsgemässen Sensor ist der Messbereich nicht primär durch die mit zunehmender Distanz abnehmende Empfindlichkeit (Änderung der Ausgangsgrösse pro Millimeter Distanzänderung), sondern durch den Signal-zu-Rauschabstand limitiert, der sich mit grösser werdendem Abstand verschlechtert. Da in der Praxis keine idealen Plattenkondensatoren verwendet werden, können Feldverzerrungen am Rand der Elektroden leichte Abweichungen der Ausgangskennlinie bewirken, welche die Abhängigkeit der Messgrösse 1/C von der Targetdistanz angibt. Diese Abweichungen sind jedoch im Vergleich zum Genauigkeitsgewinn von untergeordneter Bedeutung. Im Weiteren wird darauf hingewiesen, dass die Impulsdichte des Ausgangssignals (d.h. die Anzahl der Impulse pro Zeiteinheit) mit zunehmendem Abstand steigt, was bei grösseren Distanzen eine grössere Messbandbreite und somit eine kürzere Reaktionszeit des Sensors bewirken kann.

**Patentansprüche**

1. Kapazitiver Sensor, umfassend einen Messkondensator (1) mit einer durch äussere Faktoren beeinflussbaren Messkapazität $C_S$, einen Referenzkondensator (3) mit einer Referenzkapazität $C_R$, einen Operationsverstärker (7) und eine ausgangsseitig des Operationsverstärkers (7) mit diesem verbundene Triggervorrichtung (15),

**dadurch gekennzeichnet,**

**dass** der Operationsverstärker (7) einen volldifferentiellen Aufbau aufweist, wobei in einem Rückkopplungszweig zwischen dem negativen Ausgang und dem nicht-invertierenden Eingang des Operationsverstärkers (7) ein Integrationskondensator mit einer ersten Integrationskapazität $C_{I01}$ und in einem Rückkopplungszweig zwischen dem positiven Ausgang und dem invertierenden Eingang des Operationsverstärkers (7) ein Integrationskondensator mit einer zweiten Integrationskapazität $C_{I23}$ angeordnet sind,

**dass** der Messkondensator (1) und der Referenzkondensator (3) je mit einer ersten Elektrode mit einem vorgegebenen Bezugsspannungspotential verbunden sind, und dass die jeweils anderen bzw. zweiten Elektroden des Messkondensators (1) und des Referenzkondensators (3) über eine Schaltelemente bzw. Schalter (5) umfassende Schaltvorrichtung mit dem nicht-invertierenden und mit dem invertierenden Eingang des Operationsverstärkers (7) verbindbar sind.

2.	Kapazitiver Sensor nach Anspruch 1, **dadurch gekennzeichnet, dass** das Bezugsspannungspotential das Massepotential ist, und dass die jeweils zweiten Elektroden des Messkondensators (1) und des Referenzkondensators (3) über die Schaltvorrichtung mit dem Massepotential und dem Betriebsspannungspotential des Operationsverstärkers (7) verbindbar sind.

3.	Kapazitiver Sensor nach einem der Ansprüche 1 oder 2, **dadurch gekennzeichnet, dass** der Schaltzustand von mindestens zwei Schaltern (5) der Schaltvorrichtung durch den Ausgangszustand der Triggervorrichtung (15) steuerbar ist, und dass der Messkondensator (1) oder der Referenzkondensator (3) über solche Schalter (5) mit dem nicht-invertierenden und mit dem invertierenden Eingang des Operationsverstärkers (7) verbindbar sind.

4.	Kapazitiver Sensor nach Anspruch 3, wobei der Messkondensator (1) zusätzlich zur Messkapazität $C_S$ eine Parasitärkapazität $C_{PS}$ aufweist, und wobei der Referenzkondensator (3) zusätzlich zur Referenzkapazität $C_R$ eine Parasitärkapazität $C_{PR}$ aufweist, **dadurch gekennzeichnet, dass** eine der Parasitärkapazität $C_{PR}$ des Referenzkondensators (3) entsprechende Ausgleichskapazität $C_{PR'}$ und eine der Parasitärkapazität $C_{PS}$ des Messkondensators (1) entsprechende Ausgleichskapazität $C_{PS'}$ über Schalter (5) der Schaltvorrichtung mit dem nicht-invertierenden und mit dem invertierenden Eingang des Operationsverstärkers (7) und mit dem Massepotential sowie dem Betriebsspannungspotential verbindbar sind.

5.	Kapazitiver Sensor nach Anspruch 1, **dadurch gekennzeichnet**, der nicht-invertierende und der invertierende Eingang des Operationsverstärkers (7) alternierend über ein Umschaltmittel (13) mit dem Common-Mode-Potential $V_{CM}$ verbindbar sind.

6.	Kapazitiver Sensor nach einem der Ansprüche 1 oder 2, **dadurch gekennzeichnet, dass** der Operationsverstärker (7), die Triggervorrichtung (15), die beiden Integrationskapazitäten $C_{I01}$ und $C_{I02}$ und die Schaltvorrichtung mit den elektronischen Schaltern (5) auf einem gemeinsamen Chip integriert sind.

7.	Kapazitiver Sensor nach Anspruch 6, **dadurch gekennzeichnet, dass** die Integrationskapazitäten $C_{I01}$ und $C_{I02}$ gleich gross sind, und dass der Chip eine Eingangsschnittstelle zum Anschliessen des Messkondensators (1) und eine Eingangsschnittstelle zum Anschliessen des Referenzkondensators (3) umfasst.

8.	Verfahren zum kapazitiven Erfassen eines Objektabstandes mit einem kapazitiven Sensor gemäss einem der Ansprüche 1 bis 7, **dadurch gekennzeichnet, dass** der Messkondensator (1) und der Referenzkondensator (3) in einem 4-Phasen-Zyklus mit dem invertierenden und dem nicht-invertierenden Eingang des Operationsverstärkers (7) sowie mit dem Bezugspotential und mit dem Betriebsspannungspotential verbunden werden.

9.	Verfahren nach Anspruch 8, wobei der kapazitive Sensor gemäss einem der Ansprüche 4 bis 7 ausgebildet ist, **dadurch gekennzeichnet, dass** die Ausgleichskapazitäten $C_{PS'}$ und $C_{PR'}$ ebenfalls im 4-Phasen-Zyklus mit dem invertierenden und dem nicht-invertierenden Eingang des Operationsverstärkers (7) sowie mit dem Bezugspotential und mit dem Betriebsspannungspotential verbunden werden.

10.	Verfahren nach einem der Ansprüche 8 oder 9, **dadurch gekennzeichnet, dass** der invertierende Eingang und der nicht-invertierende Eingang des Operationsverstärkers (7) alternierend mit dem Common-Mode-Potential $V_{CM}$ des Operationsverstärkers (7) verbunden werden.

FIG. 1

FIG. 2

FIG. 3

FIG. 4

FIG. 5

FIG. 6

FIG. 7

$C_s = 1.12pF$

FIG. 8

$C_s = 560fF$

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006132960 A1

- WO 2006125639 A1